Europäisches Patentamt

European Patent Office

Office européen des brevets

(11) Veröffentlichungsnummer: **0 038 937**
**B1**

(12) **EUROPÄISCHE PATENTSCHRIFT**

(45) Veröffentlichungstag der Patentschrift:
**01.02.84**

(51) Int Cl.³: **F 16 L 11/16**, B 21 C 37/12

(21) Anmeldenummer: 81102300.1

(22) Anmeldetag: **26.03.81**

(54) Wendelrohr aus schraubenförmig gewickeltem, gewellten Band sowie Verfahren zu dessen Herstellung.

(30) Priorität **30.04.80 DE 3016719**

(43) Veröffentlichungstag der Anmeldung·
**04.11.81 Patentblatt 81/44**

(45) Bekanntmachung des Hinweises auf die Patenterteilung:
**01.02.84 Patentblatt 84/5**

(84) Benannte Vertragsstaaten:
**AT BE CH FR IT LI NL SE**

(56) Entgegenhaltungen
**DE - A - 1 650 135**
**DE - B - 2 654 963**
**FR - A - 2 323 944**
**GB - A - 1 564 933**
**US - A - 4 029 129**

(73) Patentinhaber: **Alcan Ohler GmbH,**
**D-5970 Plettenberg/Ohle (DE)**

(72) Erfinder: **Werner, Friedrich, Eschener Weg 77,**
**D-5970 Plettenberg (DE)**
Erfinder· **Büchter, Heinrich, Lindenallee 42,**
**D-5970 Plettenberg (DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath, Maximilianstrasse 58,**
**D-8000 München 22 (DE)**

BUNDESDRUCKEREI BERLIN

# Wendelrohr aus schraubenförmig gewickeltem, gewellten Band sowie Verfahren zu dessen Herstellung

Die Erfindung betrifft ein Wendelrohr aus wenigstens einem schraubenförmig gewickelten, gewellten Band, dessen Wendel die jeweils vorhergehenden Wendel über einen Teil der Bandbreite schindelartig überlappen, wobei der Überlappungsbereich durch eine Umlege-Falznaht geschlossen ist. Außerdem betrifft die Erfindung eine Vorrichtung zur Herstellung eines derartigen Wendelrohres.

Wendelrohre der eingangs genannten Gattung werden beispielsweise in der Bau- und Klimatechnik oder im Kraftfahrzeugbau verwendet und haben den Vorteil, daß sie wegen ihrer hohen Flexibilität in jede gewünschte Richtung gebogen werden können. Sie werden aus einem oder mehreren, sinusförmig gerillten Band aus dünnem Blech hergestellt, das schraubenförmig gewickelt wird, wobei sich die Bandränder schindelartig überlappen.

In Fig. 1 der beigefügten Zeichnung ist schematisch die Herstellung eines derartigen bekannten Wendelrohres dargestellt, das aus einem gewellten Band 10 um einen nicht dargestellten Dorn wendelförmig gewickelt wird. Die Bandwindungen können einander in beliebiger Breite überlappen.

Fig. 2 zeigt schematisch den Wickelvorgang eines ähnlichen, ebenfalls bekannten Wendelrohres. Hier überlappen sich die Bandwindungen 10', 10'', 10''' des Bandes 10 um etwas mehr als die Hälfte der Bandbreite. Durch diese etwas mehr als 50%ige Überlappung besteht der Überlappungsbereich 12 aus drei Lagen.

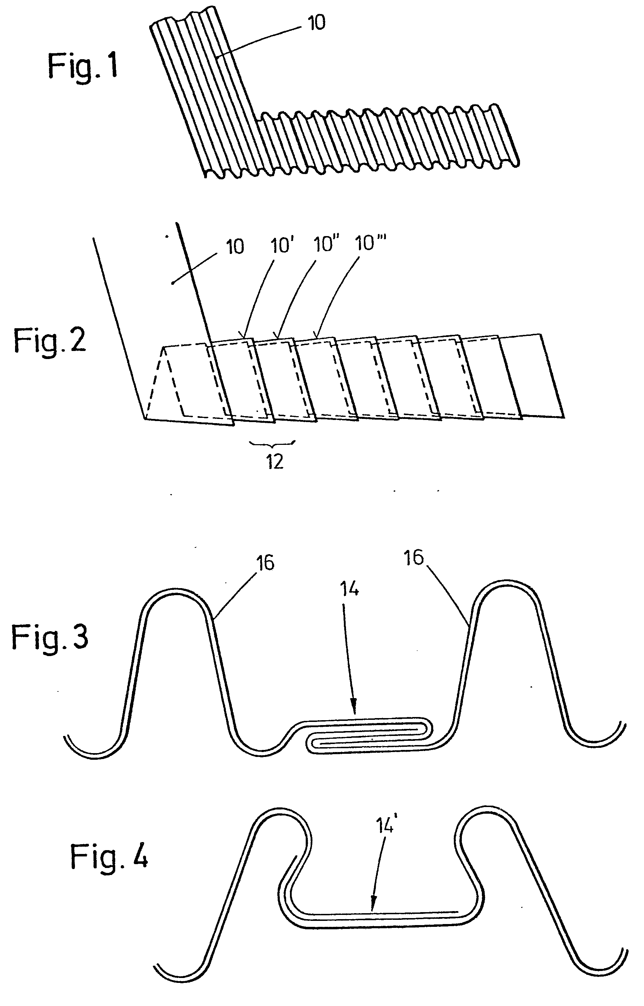

Zur Herstellung einer Verklammerung der Bandwendel im Überlappungsbereich ist es nun bekannt, eine Falznaht 14 zu bilden, die in Fig. 3 dargestellt ist. Diese Falznaht wird dadurch hergestellt, daß im Überlappungsbereich 12 eine Halbwelle 16 umgelegt und dann zu der Falznaht 14 zusammengedrückt wird (vgl. DE-A-1 650 135). Fig. 4 zeigt eine weitere, bekannte Möglichkeit, im Überlappungsbereich 12 eine Verklammerung der Bandwendel herzustellen; dies geschieht durch Ausbildung einer druckknopfähnlichen Falznaht 14'.

Durch die in Figur 3 gezeigte Umlege-Falznaht 14 werden die Windungen mit ausreichender Festigkeit untereinander verklammert. Ein Nachteil dieser Naht besteht jedoch darin, daß sie durch ihre kompakte Form und durch ihre Lage parallel zur Rohrachse ein Stück starres Rohr bildet, das beim Verbiegen des flexiblen Rohres am Stauch- und Streckvorgang nicht teilnehmen kann. Vor allem bei Wendelrohren mit einer 50%igen und größeren Überlappung ist der Anteil der Naht an der Rohrlänge sehr groß, wodurch die Flexibilität des Rohres stark herabgesetzt wird.

Die in Fig. 4 gezeigte, druckknopfähnliche Falznaht 14' beseitigt zwar teilweise die geschilderten Nachteile der einfachen Umlege-Falznaht der Fig. 3, hat jedoch den Nachteil, daß sie, wie sich in der Praxis gezeigt hat, keine ausreichende Festigkeit hat, weil sich die Windungen bereits bei geringen Belastungen wieder voneinander lösen, da sie nur durch den Hinterschnitt in den Flanken der Nahtrille aufeinander gehalten werden.

Der Erfindung liegt die Aufgabe zugrunde, ein Wendelrohr der eingangs genannten Gattung so auszubilden, daß die Falznaht mindestens die Festigkeit einer einfachen Umlege-Falznaht hat, ohne daß sie dabei die Stauchbarkeit und damit auch die Biegbarkeit des flexiblen Wendelrohres beeinträchtigt. Weiterhin soll ein Verfahren zur Herstellung eines derartigen Wendelrohres angegeben werden.

Erfindungsgemäß wird diese Aufgabe bei einem gattungsgemäßen Wendelrohr dadurch gelöst, daß die Falznaht aus einer Halbwelle gebildet ist, die unter Reduzierung ihrer Höhe in die benachbarte Wellenkuppe umgelegt und der Form der Wellenkuppe angepaßt ist, wobei die Halbwelle und die Wellenkuppe im Überlappungsbereich liegen.

Dadurch, daß gemäß der Erfindung die Falznaht in die Wellung des Wendelrohres mit einbezogen ist, hat sie — im Längsschnitt des Rohres gesehen — in radialer und in axialer Richtung eine ausgezeichnete Formschlüssigkeit. Eine vergleichbare Formschlüssigkeit haben die bekannten Wendelrohre nur in einer Richtung, d. h. entweder nur in axialer oder nur in radialer Richtung. Ein weiterer Vorteil der Erfindung besteht darin, daß das Wendelrohr auch im Nahtbereich gestaucht werden kann, weil die erfindungsgemäß ausgebildete Falznaht im Gegensatz zur einfachen Umlege-Falznaht gekrümmt ist und sich dadurch wie die übrigen Kuppen der Wellen des Wendelrohres beim Stauchen weiter krümmen kann; dagegen müßte die bekannte, einfache Umlege-Falznaht beim Stauchen einknicken, was nicht geschieht.

Die Aufgabe der Erfindung wird außerdem durch ein Verfahren zur Herstellung eines Wendelrohres dadurch gelöst, daß im Überlappungsbereich eine Halbwelle unter Reduzierung ihrer Höhe in die danebenliegende Wellenkuppe hinein umgelegt und anschließend so in die Wellenkuppe hineingedrückt wird, daß sie der Kuppenform angepaßt ist.

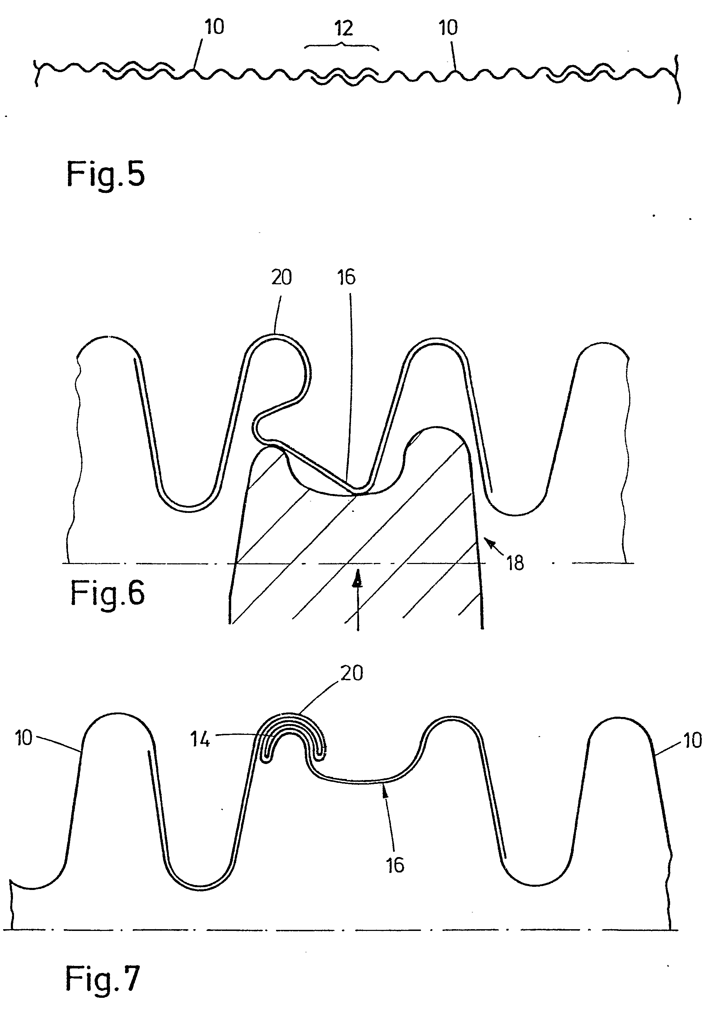

Die Erfindung ist nachstehend an zwei Ausführungsbeispielen erläutert, die in den Fig. 5 bis 10 dargestellt sind.

Dabei zeigt

Fig. 5 einen schematischen Längsschnitt durch eine Wand eines Wendelrohres mit weniger als 50% Überlappung in einem Zwischenstadium seiner Herstellung,

Fig. 6 eine vergrößerte Darstellung des Überlappungsbereiches des Wendelrohres der Fig. 5 beim Umlegen eines Wellenteils,

Fig. 7 eine der Fig. 6 entsprechende Darstellung nach Fertigstellung der Falznaht,

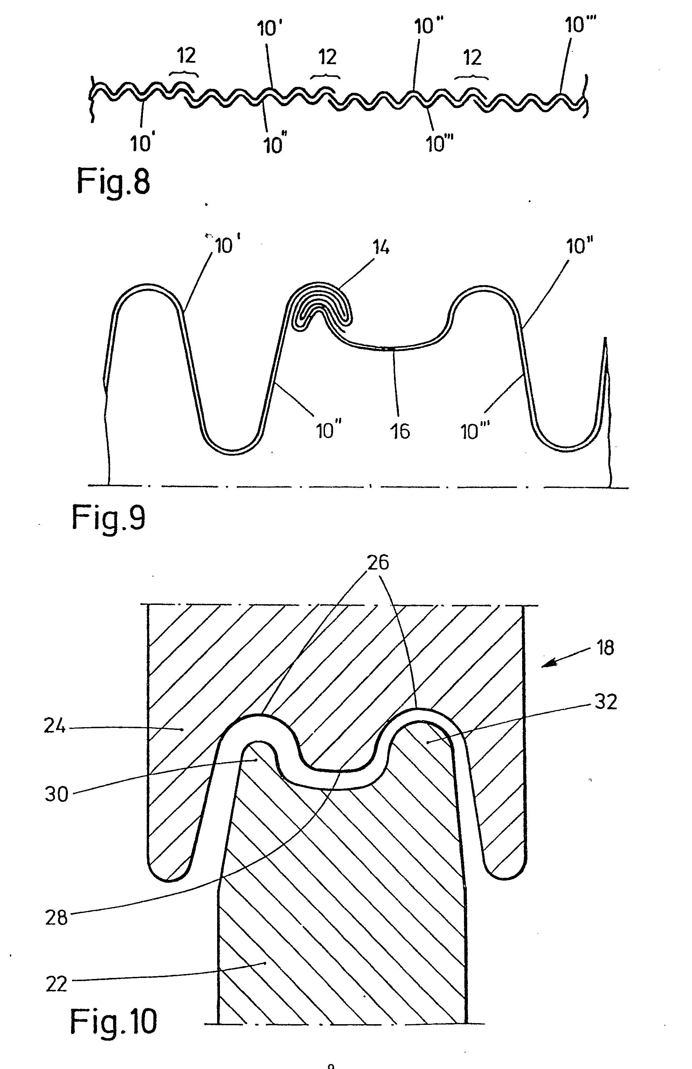

Fig. 8 eine der Fig. 5 entsprechende Darstellung eines aus einem gewellten Band gewickelten Wendelrohres mit mehr als 50% Überlappung,

Fig. 9 eine der Fig. 7 entsprechende Darstellung der fertigen Falznaht des Wendelrohres der Fig. 8 in vergrößertem Maßstab und

Fig. 10 einen schematischen Längsschnitt durch ein Werkzeug zur Fertigstellung der Falznähte.

Fig. 5 zeigt einen Längsschnitt durch eine Wand eines aus einem einzigen Band 10 gewickelten Wendelrohres vor der Herstellung der Falznaht. Im Überlappungsbereich 12 der nebeneinanderliegenden Windungen erfolgt dabei die Verklammerung, wozu, wie Fig. 6 zeigt, ein in Fig. 10 näher dargestelltes Werkzeug 18 eine Halbwelle 16 von der Rohrinnenseite her auf etwa die Hälfte bis zu einem Drittel ihrer Höhe kürzt. Anschließend wird das überschüssige Material dieser Halbwelle 16 in die benachbarte Wellenkuppe 20 hinein umgelegt und der Form dieser Wellenkuppe angepaßt. Das Ergebnis ist die in Fig. 7 gezeigte Falznaht 14, die vollständig der Form der Wellenkuppe angepaßt ist.

Bei dem in den Fig. 8 und 9 dargestellten Ausführungsbeispiel mit mehr als 50%iger Überlappung der Bandwindungen entstehen kurze Überlappungsbereiche 12, in denen die Wellen von drei Bandwindungen 10', 10'' und 10''' übereinanderliegen. Die drei Windungen in jedem Überlappungsbereich 12 sind eine Welle am Rand der äußeren Bandwindungen 10°, eine Welle in der Mitte der mittleren Bandwindungen 10'' und eine Welle am Rand der inneren Bandwindung 10'''. Die gemeinsame Welle aller drei Bandwindungen wird in derselben Weise verformt wie bei dem in den Fig. 5 bis 7 gezeigten Ausführungsbeispiel, so daß sich die in Fig. 9 dargestellte Falznaht 14 ergibt. Der Vorteil dieser Ausführung besteht darin, daß beide Bandränder einer Windung in einer Falznaht enden.

Fig. 10 zeigt schematisch das Werkzeug 18 zum Umlegen einer Halbwelle und zum Eindrücken in die benachbarte Wellenkuppe. Zur Bildung der Falznaht wird dabei auf der Rohrinnenseite eine Andruckrolle 22 drehbar angeordnet, der ebenfalls drehbar an der Rohraußenseite eine Gegenrolle 24 gegenüberliegt. Die Rillen 26 der Gegenrolle 24 halten die Kuppen der Wellen auf dem durch die Wellen des Bandes 10 vorgegebenen Abstand. Der Steg 28 zwischen den beiden Rillen 26 begrenzt die Höhenreduzierung beim Umlegen der Halbwelle 16 in die benachbarte Wellenkuppe 20. Bei diesem Vorgang verkleinert die Andruckrolle 22 die Halbwelle 16, wobei das anfallende, überschüssige Material mit Hilfe einer kleinen Wulst 30 der Andruckrolle 22 in die benachbarte Wellenkuppe 20 gedrückt wird. Die auf der anderen Seite der umzulegenden Halbwelle 16 liegende Kuppe des gewellten Bandes 10 wird durch eine größere Wulst 32 der Andruckrolle 22 ausgefüllt. Damit wird verhindert, daß das überschüssige Material der Halbwelle 16 beim Umlegen in diese Kuppe wandert, d. h. es wird sichergestellt, daß das überschüssige Material, das zur Bildung der Falznaht 14 benötigt wird, immer in dieselbe Kuppe wandert.

## Patentansprüche

1. Wendelrohr aus wenigstens einem schraubenförmig gewickelten, gewellten Band (10), dessen Wendel (10') die jeweils vorhergehenden Wendel (10'', 10''') über einen Teil der Bandbreite schindelartig überlappen, wobei der Überlappungsbereich (12) durch eine Umlege-Falznaht (14) geschlossen ist, dadurch gekennzeichnet, daß die Falznaht (14) aus einer Halbwelle (16) gebildet ist, die unter Reduzierung ihrer Höhe in die benachbarte Wellenkuppe (20) umgelegt und der Form der Wellenkuppe (20) angepaßt ist, wobei die Halbwelle (16) und die Wellenkuppe (20) im Überlappungsbereich (12) liegen.

2. Verfahren zur Herstellung eines Wendelrohres nach Anspruch 1, bei dem die Falznaht (14) durch Umlegen eines Wellenteils gebildet wird, dadurch gekennzeichnet, daß im Überlappungsbereich (12) eine Halbwelle (16) unter Reduzierung ihrer Höhe in die danebenliegende Wellenkuppe (20) hinein umgelegt und anschließend so in die Wellenkuppe (20) hineingedrückt wird, daß sie der Kuppenform angepaßt ist.

## Claims

1. Helical tube of at least one screw-like, wound, corrugated, strip (10), of which the turns (10') overlap the respective preceding turns (10'', 10''') over a part of the width of the strip in the manner of shingles, the overlapping zone (12) being closed by an overlapping fold seam (14), characterised in this that the fold seam (14) is formed by a half wave (16), which with reduction in its height is bent back into the adjacent wave crest (20) and is adapted to the shape of the wave crest (20), the half wave (16) and the wave crest (20) lying in the overlap zone (12).

2. Method for the manufacture of a helical tube according to claim 1, in which the fold seam (14) ist formed by bending over of a part of a wave, characterised in this that in the overlapping zone (12) a half wave (16) is bent over with reduction in its height into the opposing wave crest (20) and subsequently is so pressed into the wave crest (20) that it is adapted to the shape of the crest.

## Revendications

1. Tube à joint hélicoîdal constitué par au moins une bande ondulée (10) enroulée en hélice dont chaque spire (10') recouvre, à ia manière d'un bardeau, une partie de la largeur de la spire précédente (10'', 10'''), et où la zone de recouvrement (12) est fermée par un joint d'agrafage rabattu (14), caractérisé en ce que le joint agrafé (14) est formé par une demi-ondulation (16) rabattue dans le dôme d'ondulation voisin (20), en réduisant sa hauteur, et est adapté à la forme du dôme d'ondulation (20), la demi-ondulation (16) et le dôme d'ondulation (20) étant situés dans la zone de recouvrement (12).

2. Procédé pour fabriquer un tube à joint hélicoïdal tel que spécifié dans la revendication 1 dans lequel on forme le joint agrafé (14) en rabattant ou en couchant une partie d'une ondulation, caractérisé en ce que, dans la zone de recouvrement (12), on rabat une demi-ondulation (16), en réduisant sa hauteur, dans le dôme d'ondulation (20) adjacent et ent ce que, ensuite, on la refoule dans le dôme d'ondulation (20) de façon à épouser la forme de celui-ci.

Fig. 1

10

Fig. 2

10   10'   10"   10'''

12

Fig. 3

16        14        16

Fig. 4

14'

Fig.5

Fig.6

Fig.7

Fig.8

Fig.9

Fig.10